# EUROPÄISCHE PATENTSCHRIFT

(11) **EP 0 558 942 B1**
(45) Veröffentlichungstag und Bekanntmachung des Hinweises auf die Patenterteilung: **09.10.1996**
(21) Anmeldenummer: 93101642.2
(22) Anmeldetag: 03.02.1993
(51) Int. Cl.: C03C 8/04

(54) **Zinkhaltige, blei- und cadmiumfreie Glasfritten, Verfahren zu deren Herstellung und deren Verwendung**
Zinc containing, lead-free and cadmium-free glass frits, method of their preparation and their utilization
Frittes de verre contenant du zinc, pas de plomb et de cadmium, procédé de leur fabrication et leurs utilisation

(30) Priorität: 02.03.1992 FR 9202457
(43) Veröffentlichungstag der Anmeldung: 08.09.1993
(73) Patentinhaber: CERDEC AKTIENGESELLSCHAFT KERAMISCHE FARBEN, D-60327 Frankfurt (DE)
(72) Erfinder: Merigaud, Bernard, F-87400 Saint Leonard de Noblat (FR); Claus, Michel, F-87110 Solignac (FR)

(56) Entgegenhaltungen:
- EP-A- 0 267 154
- EP-A- 0 321 297
- SU-A- 1 682 335
- US-A- 2 482 533
- PATENT ABSTRACTS OF JAPAN, unexamined applications, C Field, Band 10, Nr. 36, 13. Februar 1986, The Patent Office Japanese Govt., Seite 30 C 328
- PATENT ABSTRACTS OF JAPAN, unexamined applications, C Field, Band 10, Nr. 148, 29. Mai 1986, The Patent Office Japanese Govt., Seite 15 C 350

## Beschreibung

Die Erfindung betrifft zinkhaltige, blei- und cadmiumfreie Glasfritten, ein Verfahren zu deren Herstellung und deren Verwendung. Die erfindungsgemäßen Glasfritten weisen einen Erweichungspunkt unter 510 °C auf und eignen sich zur Herstellung von Dekorüberzugsmassen für Glas, Glaskeramik und andere nichtporöse Materialien.

Das übliche Verfahren zur Herstellung von einbrennfähigen Dekorüberzugsmassen, also Glasuren, Dekorfarben und Emails, für die Dekorierung von Glas und anderen keramischen und nichtkeramischen Materialien, für welche Einbrenntemperaturen unterhalb 750 °C gefordert werden, bedingt die Verwendung niedrig schmelzender Glasfritten, deren Zusammensetzung meist einen hohen Bleigehalt aufweist. Wegen der Toxizität der genannten bleihaltigen Glasfritten gegenüber möglichen Verwendern und Arbeitern bei der Herstellung und Verarbeitung solcher Produkte sowie im Hinblick auf den Umweltschutz besteht ein aktueller, rasch wachsender Bedarf an blei- und cadmiumfreien Glasfritten.

Eine Anzahl von blei - und cadmiumfreien Glasfritten sind in der Literatur vorgeschlagen worden. Es zeigte sich aber, daß derartige Produkte in der einen oder anderen Eigenschaft den an sie für bestimmte Anwendungen gestellten Forderungen nicht immer genügen.

So ist aus der US-A 4,446,241 eine bleifreie Glasfrittenzusammensetzung bekannt, welche im wesentlichen aus Li₂O, B₂O₃, SiO₂ sowie 2-33 Gew.-% SnO₂ + CaO und 2-33 Gew.-% ZrO₂ + La₂O₃ besteht; fakultative Bestandteile sind Al₂O₃, SrO, BaO, Na₂O und F. Die Glaserweichungstemperatur (fiber softening point) dieser Glasfritten liegt im Bereich von 535 °C bis 609 °C. Durch die Erweichungstemperatur oberhalb 535 °C sowie den die mechanischen Eigenschaften ungünstig beeinflussenden Gehalt an Li₂O sind die Einsatzmöglichkeiten limitiert - Li⁺ wandert während des Brandes in das dekorierte Glas und vermindert dadurch die mechanische Resistenz des dekorierten Gegenstands.

Nichttoxische Glasfritten mit einem Erweichungspunkt unter 535 °C, welche allerdings ebenfalls einen hohen (9-13 Gew.-%) Gehalt an Li₂O aufweisen, sind auch aus der EP-B 0 294 502 bekannt.

Glasfritten, welche aus der US-A 4,537,862 bekannt wurden, weisen Erweichungspunkte im gleichen Bereich wie die vorgenannten Glasfritten auf. Die Zusammensetzung basiert im wesentlichen auf B₂O₃, SiO₂, 10-18 Gew.-% ZrO₂ und 10-18 Gew.-% Seltenerdmetalloxiden, wobei das Gewichtsverhältnis von ZrO₂ zu den Seltenerdmetalloxiden kritisch ist und 1 zu 1 bis 1,4 zu 1 beträgt. Durch ihren Gehalt an Oxiden der Seltenen Erden sind derartige Glasfritten sehr teuer.

Glasfritten gemäß der EP-A 0 347 379 mit einer Glasurtemperatur um 600 °C enthalten außer SiO₂, B₂O₃, Alkalioxiden und ZrO₂ + TiO₂ 38-43 Gew.-% Bi₂O₃. Der sehr hohe Bi₂O₃-Gehalt wird von Fachleuten hinsichtlich toxikologischer Eigenschaften als nachteilig angesehen.

Ein mehrfach beschrittener Weg, zu Pb- und Cd-freien Glasfritten mit niedrigem Erweichungspunkt zu gelangen, besteht darin, Zinkoxid zur Glasfrittenzusammensetzung zu geben:

Beispielsweise besteht die Glasfrittenzusammensetzung der US 4,315,778 im wesentlichen aus 30-45 % SiO₂, 13-18 % B₂O₃, 12-15 % Alkalioxide, 4-10 % ZrO₂, 18-23 % ZnO und 4-10 % F (Angaben Gew.-%). Die UV-Strahlung absorbierende Glasfrittenzusammensetzung gemäß der EP-A 0 321 297 besteht aus 19-45 % SiO₂, 20-33 % B₂O₃, 8-15 % Alkalioxiden, 2-25 % eines oder mehrerer Oxide aus der Reihe Ce, Mn, Fe, Co, Cu, V und Mo und kann zusätzlich unter anderem 0-35 % ZnO, vorzugsweise 8-21 % ZnO enthalten (Angaben Gew.-%). Weitere zinkhaltige, Pb- und Cd-freie Glasfrittenzusammensetzungen sind in der GB-B 1 013 597 (12-13 Gew.-% ZnO), GB-B 768 925 (4-15 Gew.-% ZnO), JP-A 155040/81 (1-15 Gew.-% ZnO), JP-A 186438/85 (20-25 Gew.-% ZnO) und EP-B 0 267 154 beschrieben worden.

Obligatorische Bestandteile der zwischen 450 °C und 600 °C erweichenden Glasfritten der EP-B 0 267 154 sind 5-14 Mol-% Na₂O, 8-25 Mol-% ZnO, 6-13 Mol-% B₂O₃ und 45-60 Mol-% SiO₂; fakultative Bestandteile sind K₂O, Li₂O, CaO, SiO, BaO, Bi₂O₃, Al₂O₃, ZrO₂, TiO₂ und WO₃.

Aufgabe der Erfindung ist, weitere Glasfritten beziehungsweise die ihnen zugrundeliegenden Zusammensetzungen aufzuzeigen, deren Erweichungspunkt unterhalb 510 °C liegt und welche zinkhaltig, jedoch blei- und cadmiumfrei sind. Eine weitere Aufgabe besteht in der Anwendbarkeit der Glasfritten als Basisfritte für Dekorüberzugsmassen, wie Glasuren und Emails, welche bei möglichst niedrigen Temperaturen eingebrannt werden können, so daß Verformungen des zu dekorierenden Gegenstandes, wie insbesondere Glas, sicher vermieden werden können.

Gefunden wurden zinkhaltige, blei- und cadmiumfreie Glasfritten mit einem Erweichungspunkt (Glasübergangstemperatur) von weniger als 510 °C, welche dadurch gekennzeichnet sind, daß sie im wesentlichen aus
31 bis 50 Mol-% ZnO
10 bis 44 Mol-% SiO₂
11 bis 35 Mol-% B₂O₃
11 bis 25 Mol-% Na₂O
0 bis 4 Mol-% Li₂O
0 bis 10 Mol-% TiO₂
0 bis 25 Mol-% ZrO₂
0 bis 12 Mol-% CaO
0 bis 12 Mol-% SrO
0 bis 12 Mol-% BaO
0 bis 8 Mol-% F ,
wobei die Summe aus CaO, SrO und BaO gleich oder kleiner 12 Mol-% ist, bestehen.

Erfindungswesentliche Bestandteile der Glasfritten sind somit ZnO, B₂O₃, SiO₂ und Na₂O, wobei der ZnO-Gehalt größer ist als in vorbekannten Glasfritten. Dieser hohe ZnO-Anteil ist für die herausragenden Eigenschaften der Glasfritten verantwortlich.

Unter dem Begriff "im wesentlichen" ist zu verstehen, daß die Glasfritten zusätzlich zu den angegebenen Bestandteilen insgesamt weniger als 2 Mol-%, vorzugsweise weniger als 1 Mol-% an anderen Metalloxiden, beispielsweise Al₂O₃, SnO₂, CeO₂, La₂O₃, MgO, P₂O₅, enthalten können; der Gehalt an färbenden Metalloxiden, wie etwa Fe₂O₃, MnO, CaO, Cr₂O₃ wird in der Regel möglichst niedrig sein, also insgesamt unter 0,5 Mol-%.

Bevorzugte Glasfritten setzen sich wie folgt zusammen:
33 bis 45 Mol-% ZnO
10 bis 40 Mol-% SiO₂
11 bis 31 Mol-% B₂O₃
11 bis 20 Mol-% Na₂O
0 bis 4 Mol-% K₂O
0 bis 4 Mol-% Li₂O
0 bis 10 Mol-% TiO₂
0 bis 10 Mol-% ZrO₂
0 bis 10 Mol-% CaO
0 bis 10 Mol-% SrO
0 bis 10 Mol-% BaO
0 bis 8 Mol-% F ,
wobei die Summe aus CaO, SrO und BaO gleich oder kleiner 10 Mol-% ist.

Besonders bevorzugte Glasfritten bestehen aus 33-45 Mol-% ZnO, 11-35 Mol-% SiO₂, 11-31 Mol-% B₂O₃, 11-20 Mol-% % Na₂O₃ und 0-4 Mol-% F.

Die Anwesenheit der genannten Mengen B₂O₃ und Na₂O ist in Verbindung mit ZnO und SiO₂ erforderlich, um Glasfritten mit einem Erweichungspunkt von unter 510 °C, vorzugsweise 450 bis 485 °C, zu erhalten. Durch Erhöhung des Gehalts an Boroxid (B₂O₃) ist es darüber hinaus möglich, den Wärmeausdehnungskoeffizienten zu vermindern; der B₂O₃-Gehalt muß andererseits begrenzt werden, um die chemische Beständigkeit zu bewahren. Ein steigender Na₂O-gehalt erlaubt einerseits den Erweichungspunkt zu erniedrigen, andererseits wird dadurch der Ausdehnungskoeffizient erhöht, weshalb sein Gehalt gleichfalls begrenzt werden muß. Durch TiO₂ als Bestandteil der Frittenzusammensetzung wird die Widerstandsfähigkeit gegenüber sauren Stoffen erhöht. Ein Zusatz von ZrO₂ erhöht die Beständigkeit der Fritten gegenüber alkalischen Stoffen.

Die Anwesenheit der Erdalkalioxide BaO, SrO und CaO führt zu einer Erhöhung des Erweichungspunktes, gleichzeitig aber zu einer Verbesserung der chemischen Beständigkeit. Aus toxikologischen Erwägungen wird man den Gehalt an BaO und SrO im allgemeinen niedrig halten.

Die Herstellung von Glasfritten ist dem Fachmann bekannt. Ein Gemisch aus pulverförmigen oxidischen oder beim Schmelzen Oxide bildenden sowie bei Bedarf fluoridischen Glasrohstoffen wird bei 1100 bis 1300 °C, insbesondere 1150 bis 1200 °C geschmolzen; anschließend wird die Schmelze plötzlich abgeschreckt, etwa durch Einfließenlassen der Schmelze in Wasser, und, sofern nötig, mittels üblicher Methoden zu Pulver gemahlen. Geeignete Rohstoffe für die Hauptbestandteile der Glasfritte sind Quarzsand, Zinkoxid, Borsäure oder Borax, Natriumcarbonat. Die fakultativen Bestandteile werden zweckmäßigerweise in oxidischer Form - TiO₂, ZrO₂, CaO, SrO, BaO - beziehungsweise als Carbonate - K₂CO₃, Li₂CO₃ - eingesetzt. Fluor wird vorzugsweise als NaF, AlF₃ oder Na₂SiF₆ in den Frittenansatz eingebracht; während des Schmelzens der Fritte wird im allgemeinen ein Teil des Fluors in Form von Gas entfernt, der Rest verbleibt als Fluorid in der Fritte. Die Rohstoffe werden bei der Herstellung der Glasfritte in einem Mengenverhältnis eingesetzt, das demjenigen der erfindungsgemäßen Glasfritte entspricht.

Die Glasfritten der anspruchsgemäßen Zusammensetzung eignen sich als Basisfritte zur Herstellung von Dekorüberzugsmassen, welche unterhalb 750 °C, insbesondere aber unter 630 °C und vorzugsweise zwischen etwa 530 °C und unterhalb 600 °C, eingebrannt werden. Als Dekorüberzugsmassen werden Glasuren und Emails und Dekorfarben verstanden. Im Falle der Glasuren können diese außer der Basisfritte transparente farbige Glasfritten enthalten. Emails enthalten außer der Basisfritte anorganische Pigmente. Basisfritte und Pigmente werden in bekannter Weise gemeinsam vermahlen. Das Gewichtsverhältnis der Basisfritte zu dem oder den Pigmenten eines Emails liegt üblicherweise im Bereich von 95 zu 5 bis 80 zu 20. Zur Herstellung sogenannter Dekorfarben wird das Gemisch aus Glasfritte und Pigment einem Sinterprozeß mit nachfolgender Mahlung unterworfen.

Die niedrige Einbrenntemperatur der erfindungsgemäße Glasfritten enthaltenden Dekorüberzugsmassen macht diese zur Dekoration von Glas, Glaskeramik und anderen nichtporösen keramischen und nichtkeramischen, etwa metallischen Materialien geeignet. Hervorzuheben ist insbesondere die Verwendung solcher überzugsmassen für die Dekoration von Glas, da eine Verformung des zu dekorierenden Gegenstands ausgeschlossen werden kann. Zur Dekoration wird die Glasfritte mit einem Mineralpigmentzusatz bis zu einer mittleren Feinheit von meist 5-10 um gemahlen; das gemahlene Fritte-Pigment-Gemisch wird in einem üblichen, organischen Druckmedium dispergiert und die erhaltene Paste mittels üblicher Methoden - beispielsweise Siebdruck, Spritzauftrag, Stempeldruck - auf den zu dekorierenden Gegenstand aufgetragen; anschließend wird das Dekor eingebrannt. Die unter Verwendung der erfindungsgemäßen Glasfritten erhältlichen Dekorüberzugsmassen sind zur Dekoration von Parfüm- oder Kosmetikflakons, Trinkgläsern und Flaschen besonders geeignet.

Die erfindungsgemäßen Glasfritten enthalten, wie dargelegt, einen höheren ZnO-Gehalt als vorbekannte Pb- und Cd-freie Glasfritten. Es war nicht vorhersehbar, daß Glasfritten mit einem gegenüber vorbekannten Fritten deutlich höheren Gehalt an ZnO sowohl unterhalb 510 °C schmelzen als auch ausgezeichnete anwendungstechnische Eigenschaften, darunter eine gute chemische Beständigkeit, aufweisen.

### Beispiele

Die nachfolgenden Beispiele zeigen in tabellarischer Form (Tabellen 1 bis 3) die Zusammensetzung erfindungsgemäßer Glasfritten sowie deren Wärmeausdehnungskoeffizient α zwischen 0 und 300 °C und Erweichungspunkt (=Glasübergangstemperatur Tg, bestimmt durch Wärmeausdehnungsmessung). Die Herstellung der Glasfritten erfolgt, wie zuvor beschrieben, unter Verwendung von Quarzsand, Soda, Boroxid, Zinkoxid, beziehungsweise zusätzlich ZrO₂, NaF beziehungsweise Na₂SiF₆, CaO, SrO, BaO bei einer Schmelztemperatur von 1150 bis 1200 °C. Die Fritten gemäß Tabelle 2 haben sich besonders gut für die Glasdekoration bewährt.

**Tabelle 1**

| Beispiel Nr. | 1 | 2 | 3 | 4 | 5 |
|---|---|---|---|---|---|
| | | | | | |
| Na₂O (Mol-%) | 13,9 | 16,9 | 19,8 | 17,4 | 19,3 |
| ZnO (Mol-%) | 39,7 | 37,7 | 44,7 | 39,8 | 34,2 |
| B₂O₃ (Mol-%) | 16,5 | 15,1 | 11,7 | 30,9 | 11,3 |
| SiO₂ (Mol-%) | 29,9 | 30,3 | 23,8 | 11,9 | 35,2 |
| | | | | | |
| | | | | | |
| αₒ ³⁰⁰ (-10⁻⁷.K⁻¹) | 79,0 | 94,3 | 85,3 | 87,0 | 101 |
| Tg (°C) | 502 | 467 | 465 | 465 | 486 |

**Tabelle 2**

| Beispiel Nr. | 6 | 7 | 8 | 9 | 10 |
|---|---|---|---|---|---|
| | | | | | |
| Na₂O (Mol-%) | 16,4 | 15,9 | 17,9 | 15,9 | 15,7 |
| ZnO (Mol-%) | 35,8 | 34,7 | 38,5 | 40,5 | 37,6 |
| B₂O₃ (Mol-%) | 19,4 | 24,0 | 26,0 | 28,2 | 28,0 |
| SiO₂ (Mol-%) | 24,8 | 21,9 | 13,9 | 11,7 | 15,0 |
| F (Mol-%) | 3,6 | 3,5 | 3,7 | 3,7 | 3,7 |
| | | | | | |
| | | | | | |
| αₒ ³⁰⁰ (·10⁻⁷.K⁻¹) | 87,8 | 86,3 | 93,7 | 83,7 | 81,6 |
| Tg (°C) | 475 | 485 | 450 | 465 | 475 |

**Tabelle 3**

| Beispiel Nr. | 11 | 12 | 13 |
|---|---|---|---|
| | | | |
| Na₂O (Mol-%) | 16,5 | 11,1 | 15,3 |
| ZnO (Mol-%) | 33,5 | 35,5 | 37,7 |
| B₂O₃ (Mol-%) | 14,7 | 17,8 | 20,0 |
| SiO₂ (Mol-%) | 22,6 | 22,8 | 17,0 |
| F (Mol-%) | 7,2 | 7,2 | |
| ZrO₂ (Mol-%) | 5,5 | 5,6 | |
| CaO (Mol-%) | | | 5,2 |
| SrO (Mol-%) | | | 2,9 |
| BaO (Mol-%) | | | 1,9 |
| | | | |
| | | | |
| αₒ ³⁰⁰ (·10⁻⁷.K⁻¹) | 89,6 | 72,7 | 87,4 |
| Tg (°C) | 475 | 505 | 510 |

## Patentansprüche

1. Zinkhaltige, blei- und cadmiumfreie Glasfritten mit einem Erweichungspunkt (Glasübergangstemperatur)
von weniger als 510 °C,
dadurch gekennzeichnet,
daß sie im wesentlichen aus
31 bis 50 Mol-% ZnO
10 bis 44 Mol-% SiO₂
11 bis 35 Mol-% B₂O₃
11 bis 25 Mol-% Na₂O
0 bis 4 Mol-% Li₂O
0 bis 10 Mol-% TiO₂
0 bis 25 Mol-% ZrO₂
0 bis 12 Mol-% CaO
0 bis 12 Mol-% SrO
0 bis 12 Mol-% BaO
0 bis 8 Mol-% F ,
wobei die Summe aus CaO, SrO und BaO gleich oder kleiner 12 Mol-% ist, bestehen.

2. Glasfritten nach Anspruch 1,
dadurch gekennzeichnet,
daß sie im wesentlichen aus
33 bis 45 Mol-% ZnO
10 bis 40 Mol-% SiO₂
11 bis 31 Mol-% B₂O₃
11 bis 20 Mol-% Na₂O
0 bis 4 Mol-% K₂O
0 bis 4 Mol-% Li₂O
0 bis 10 Mol-% TiO₂
0 bis 10 Mol-% ZrO₂
0 bis 10 Mol-% CaO
0 bis 10 Mol-% SrO
0 bis 10 Mol-% BaO
0 bis 8 Mol-% F ,
wobei die Summe aus CaO, SrO und BaO gleich oder kleiner 10 Mol-% ist, bestehen.

3. Glasfritten nach Anspruch 1,
dadurch gekennzeichnet,
daß sie im wesentlichen aus
33 bis 45 Mol-% ZnO
11 bis 35 Mol-% SiO₂
11 bis 31 Mol-% B₂O₃
11 bis 20 Mol-% Na₂O
0 bis 4 Mol-% F
bestehen.

4. Verfahren zur Herstellung von Glasfritten gemäß einem der Ansprüche 1 bis 3 durch Schmelzen eines Gemisches aus pulverförmigen oxidischen oder Oxide bildenden sowie bei Bedarf fluoridischen Glasrohstoffen bei 1150 bis 1200 °C und plötzliches Abschrecken der Schmelze,
dadurch gekennzeichnet,
daß man die Glasrohstoffe in einer solchen Menge verwendet, daß sich das Gemisch im wesentlichen aus
31 bis 50 Mol-% ZnO
10 bis 44 Mol-% SiO₂
11 bis 35 Mol-% B₂O₃
11 bis 25 Mol-% Na₂O
0 bis 4 Mol-% Li₂O
0 bis 10 Mol-% TiO₂
0 bis 25 Mol-% ZrO₂
0 bis 12 Mol-% CaO
0 bis 12 Mol-% SrO
0 bis 12 Mol-% BaO
0 bis 8 Mol-% F ,
wobei die Summe aus CaO, SrO und BaO gleich oder kleiner 12 Mol-% ist, zusammensetzt.

5. Verwendung der Glasfritten nach einem der Ansprüche 1 bis 3 als Basisfritte zur Herstellung von unterhalb 630 °C einbrennfähigen Dekorüberzugsmassen, vorzugsweise solche für die Glasdekoration.

## Claims

1. Zinc-containing, lead-free and cadmium-free glass frits with a softening point (glass transition temperature) of less than 510 °C, characterised in that they are composed substantially of
31 to 50 mole % ZnO
10 to 44 mole % SiO₂
11 to 35 mole % B₂O₃
11 to 25 mole % Na₂O
0 to 4 mole % Li₂O
0 to 10 mole % TiO₂
0 to 25 mole % ZrO₂
0 to 12 mole % CaO
0 to 12 mole % SrO
0 to 12 mole % BaO
0 to 8 mole % F,
wherein the sum of CaO, SrO and BaO is equal to or less than 12 mole %.

2. Glass frits according to claim 1, characterised in that they are composed substantially of
33 to 45 mole % ZnO
10 to 40 mole % SiO₂
11 to 31 mole % B₂O₃
11 to 20 mole % Na₂O
0 to 4 mole % K₂O
0 to 4 mole % Li₂O
0 to 10 mole % TiO₂
0 to 10 mole % ZrO₂
0 to 10 mole % CaO
0 to 10 mole % SrO
0 to 10 mole % BaO
0 to 8 mole % F,
wherein the sum of CaO, SrO and BaO is equal to or less than 10 mole %.

3. Glass frits according to claim 1, characterised in that they are composed substantially of
33 to 45 mole % ZnO
11 to 35 mole % SiO₂
11 to 31 mole % B₂O₃
11 to 20 mole % Na₂O
0 to 4 mole % F.

4. A process for the preparation of glass frits according to one of claims 1 to 3 by melting a mixture of oxide or oxide-forming and, if necessary, fluoride glass raw materials in powder form at 1150 to 1200 °C and sudden quenching of the melt, characterised in that the glass raw materials are used in a quantity such that the mixture is composed substantially of
31 to 50 mole % ZnO
10 to 44 mole % SiO₂
11 to 35 mole % B₂O₃
11 to 25 mole % Na₂O
0 to 4 mole % Li₂O
0 to 10 mole % TiO₂
0 to 25 mole % ZrO₂
0 to 12 mole % CaO
0 to 12 mole % SrO
0 to 12 mole % BaO
0 to 8 mole % F,
wherein the sum of CaO, SrO and BaO is equal to or less than 12 mole %.

5. The use of the glass frits according to one of claims 1 to 3 as base frit for the preparation of decorative coating compositions which can be burnt in at temperatures below 630 °C, preferably such compositions for glass decoration.

## Revendications

1. Frittes de verre contenant du zinc, sans plomb ni cadmium avec un point de ramollissement (température de transition vitreuse) inférieur à 510°C,
caractérisées en ce qu'elles sont composées essentiellement de :
31 à 50 % molaire de ZnO
10 à 44 % molaire de SiO₂
11 à 35 % molaire de B₂O₃
11 à 25 % molaire de Na₂O
0 à 4 % molaire de LiO₂
0 à 10 % molaire de TiO₂
0 à 25 % molaire de ZrO₂
0 à 12 % molaire de CaO
0 à 12 % molaire de SrO
0 à 12 % molaire de BaO
0 à 8 % molaire de F,
la somme de CaO, SrO et BaO étant égale ou inférieure à 12 % molaire.

2. Frittes de verre selon la revendication 1,
caractérisées en ce qu'elles sont constituées essentiellement de :
33 à 45 % molaire de ZnO
10 à 40 % molaire de SiO₂
11 à 31 % molaire de B₂O₃
11 à 20 % molaire de Na₂O
0 à 4 % molaire de K₂O
0 à 4 % molaire de Li₂O
0 à 10 % molaire de TiO₂
0 à 10 % molaire de ZrO₂
0 à 10 % molaire de CaO
0 à 10 % molaire de SrO
0 à 10 % molaire de BaO
0 à 8 % molaire de F,
la somme de CaO, SrO et BaO étant égale ou inférieure à 10 % molaire.

3. Frittes de verre selon la revendication 1,
caractérisées en ce qu'elles sont constituées essentiellement de :
33 à 45 % molaire de ZnO
11 à 35 % molaire de SiO₂
11 à 31 % molaire de B₂O₃
11 à 20 % molaire de Na₂O
0 à 4 % molaire de F.

4. Procédé de fabrication de frittes de verre selon une des revendications 1 à 3 par fusion d'un mélange de matières premières du verre pulvérulentes oxydées ou formant des oxydes ainsi que fluorhydriques au besoin de 1150 à 1200°C et trempe brusque du produit fondu,
caractérisé en ce qu'on utilise les matières premières du verre dans une quantité telle que le mélange soit essentiellement composé de :
31 à 50 % molaire de ZnO
10 à 44 % molaire de SiO₂
11 à 35 % molaire de B₂O₃
11 à 25 % molaire de Na₂O
0 à 4 % molaire de LiO₂
0 à 10 % molaire de TiO₂
0 à 25 % molaire de ZrO₂
0 à 12 % molaire de CaO
0 à 12 % molaire de SrO
0 à 12 % molaire de BaO
0 à 8 % molaire de F,
la somme de CaO, SrO et BaO étant égale ou inférieure à 12 % molaire.

5. Utilisation des frittes de verre selon une des revendications 1 à 3, comme fritte de base pour la production de produits de revêtement de décoration aptes à la cuisson à 630°C, de préférence ceux servant à la décoration du verre.
